# NOUVEAU FASCICULE DE BREVET EUROPEEN

(11) **EP 0 828 446 B2**
(45) Date de publication et mention de la décision concernant l'opposition: **08.06.2005**
(45) Mention de la délivrance du brevet: 13.12.2000
(21) Numéro de dépôt: 96917538.9
(22) Date de dépôt: 23.05.1996
(51) Int. Cl.: A47G 7/06, B65D 85/50

(54) **DISPOSITIF POUR LA PRESENTATION D'UN BOUQUET DE FLEURS**
BLUMENSTRAUSSPRÄSENTIERVORRICHTUNG
BOUQUET PRESENTATION DEVICE

(30) Priorité: 24.05.1995 FR 9506402
(43) Date de publication de la demande: 18.03.1998
(60) Demande divisionnaire: 00201789.5
(73) Titulaire: Charrin, Philippe, 26600 Beaumont Monteux (FR); Charrin, André, 26600 Beaumont Monteux (FR)
(72) Inventeur: Charrin, Philippe, 26600 Beaumont Monteux (FR); Charrin, André, 26600 Beaumont Monteux (FR)
(74) Mandataire: Schmitz, Jean-Marie
(86) Numéro de dépôt international: PCT/FR1996/000774
(87) Numéro de publication internationale: WO 1996/037133

(56) Documents cités:
- DE-B- 1 131 043
- FR-A- 944 529
- FR-A- 944 871
- FR-A- 1 042 436
- FR-A- 2 286 759
- FR-A- 2 619 698
- GB-A- 2 128 083

## Description

L'invention est relative à un dispositif pour la présentation de bouquets individuels de fleurs, et est défini dans la revendication 1. Les revendications 2-10 concernent des modes particuliers d'exécution.

Le document GB-A-2128083 décrit une feuille d'habillage d'un pot de fleurs, lequel est posé sur un tampon en matériau absorbant servant de réservoir d'eau. La base du tampon est placée sur une feuille imperméable à l'eau, et relevée le long de la surface latérale du pot pour empêcher toute fuite d'eau vers l'extérieur. Le diamètre du tampon doit néanmoins être adapté au diamètre de la base du pot. Un tel dispositif ne peut pas servir pour la présentation d'un bouquet de fleurs coupées ne faisant pas usage d'un pot rigide.

Le dispositif pour la présentation individuelle de bouquets de fleurs, consiste en une pièce technique rigide, de mise en place rapide, permettant la présentation de bouquets individuels, servant de support simple pour bouquet de fleurs coupées, et de support pour bouquet de fleurs sèches en magasin et libre service, en offrant la possibilité de transformation, par la mise en place d'une feuille étanche, en bouquet à réserve d'eau, en garantissant par sa forme conique et rapport d'eau, une stabilité parfaite. De ce fait il devient un vase jetable. Des collerettes rondes ou carrées s'adaptent au dispositif, et le transforme en coupe jetable.

La présente invention conceme un dispositif livré à plat à montage rapide, ou en volume s'adaptant à tout bouquet de fleurs coupées comme support en stockage ou à la vente, par ses différentes formes avec ou sans fond, ronds, carres, triangulaires, ou autres.

Ce dispositif et son bouquet pliés, dans toutes feuilles étanches, communément employées en milieu horticole ou fleuriste, permet une fois en forme de contenir une réserve d'eau dont le poids à sa base assure une stabilité parfaite avec une hauteur d'eau pour le transport de 2cm.

Le principe selon l'invention permet de transporter, du lieu de vente au destinataire, un bouquet plié avec la réserve d'eau contenue dans son emballage, en lui assurant sa conservation jusqu'au client final , et tout le long du trajet sans flétrissement.

Il est facile de compenser l'eau évaporée, sans avoir tout au long de sa durée de vie besoin d'utiliser de vase.

Le fleuriste peut ajouter des conservateurs professionnels, ou des colorants simples, ou gélifiant pour améliorer la présentation.

Il se pose simplement sur un meuble ou sur toutes surfaces planes.
Cette invention va permettre au fleuriste, de pouvoir offrir une possibilité de décoration personnelle à sa clientèle et d'améliorer la vente, par la possibilité de jeux de lumière et la coloration de l'eau, qui n'était pas permise avant . Par impression, de la feuille, le fleuriste peut assortir celle ci au couleur du bouquet et y faire imprimer son logo ou son nom. L'effet décoratif peut être amélioré par l'adjonction de feuilles colorées, mis sous le cône à plats ou froissées.

Une fois les fleurs fanées, le consommateur final jettera l'ensemble sans avoir eu besoin de défaire l'emballage.

La présente invention sera mieux comprise en se référant aux figures suivantes :

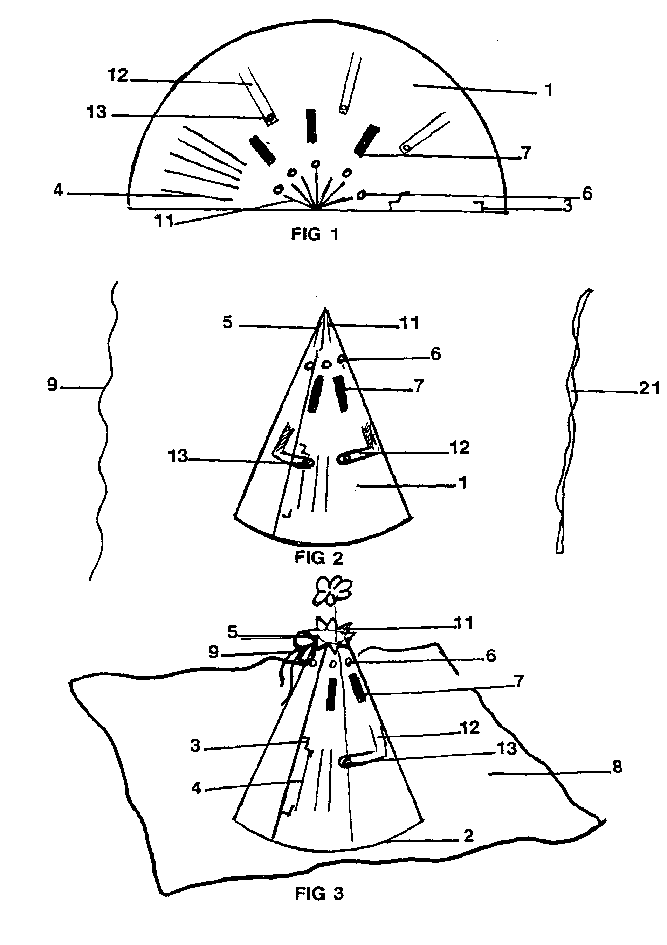

La figure 1 représentant le dispositif à plat
La figure 2 représentant le dispositif formé avec lacets et rubans
La figure 3 représentant le dispositif prêt à l'emploi avec sa feuille d'emballage et ses fleurs

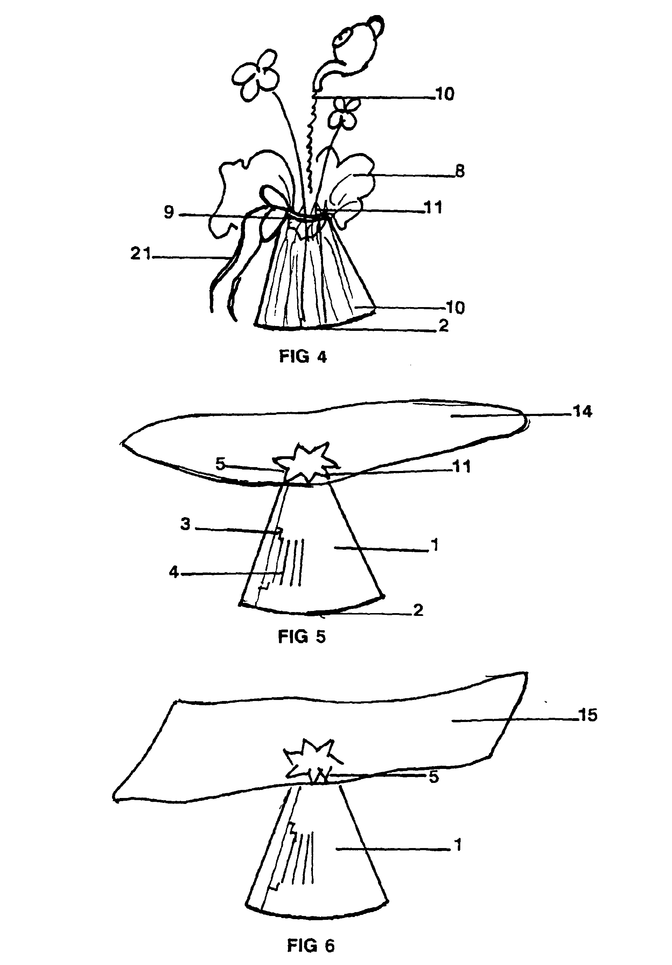

La figure 4 représentant le dispositif réalisé avec son bouquet et le remplissage
La figure 5 représentant le dispositif avec sa coupe ronde pour présentation couchée
La figure 6 représentant le dispositif avec sa coupe carrée

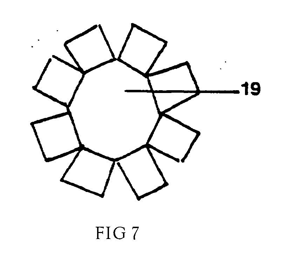

La figure 7 représentant le dispositif servant de fond pouvant s'adapter à tous les modèles

Le support (1) est composé de feuilles rigides, résistantes à l'eau, translucide, ou transparente, d'épaisseur suffisante pour assurer le maintien de l'eau et du bouquet dans un volume rigide.

L'invention a pour objet une pièce technique de différentes hauteurs, pour tout bouquets de toutes fleurs, permettant de les présenter , individuellement, verticalement, sans eau.

Obtenue par découpe, thermoformage ou injection la forme à plat (1) avant sa mise en volume restitura par le système de clipsage (3) et de réglage (4), une forme conique étroite en haut (5) munie de lamelles (11) s'appuyant sur les tiges du bouquet, large en bas (2) de diamètre différent et s'adaptant au bouquet.
Les orifices (6) permettent une première fixation du bouquet au dispositif avant la mise en place de la feuille (8) par tout lien (9) glissé dans les dits orifices, de le rendre solidaire en lui permettant une présentation individuelle et verticale.
Ce lien peut également avoir le même résultat en resserrant les lamelles (11).
Le rayon de définition du support en gardant le même principe permet la restitution de cône de forme et de volume différent.
L'invention selon le principe de pliage du bouquet classique, constitué du dispositif et d'une feuille étanche (8) relevée, et précollée sur celui ci au moyen de double face (7) facilitant la mise en forme de la feuille . Les languettes (11 ) permettent un deuxième attachage final au dessus du lien (9), par un ruban (21) décoratif ,maintenant la feuille (8) contre les lamelles souples (11) qui s'appuient sur les tiges du bouquet.
A ce moment là, le bouquet de fleurs est complètement solidaire du dispositif.
Le remplissage d'eau par l'ouverture (5) se localisant en base (2) assure la conservation des fleurs.
Le poids de l'eau (10) assure par lestage, la stabilité de l'ensemble et il devient un vase jetable. Pour des compositons hautes avec très peu de fleurs, des languettes (12) percées d'un orifices (13) peuvent être mise en place intérieurement pour tenir la tige de certaines fleurs . Des collerettes rondes ( 14) ou carrées (15) peuvent être adaptées sur tous les dispositifs. Des dispositifs, suivant lé même principe peuvent être conçus, carrés (16) triangulaire (17) rectangulaire (18), avec fond pour certaines fleurs tropicales.
Un fond (19) peut s'adapter à la plupart des dispositifs.
Le dispositif selon l'invention, permet à moindre frais de réaliser des bouquets, sans avoir recours à des vases classiques de pouvoir les offrir et les conserver.

## Revendications

1. Dispositif pour la présentation de bouquets individuels de fleurs, **caractérisé en ce qu'**il comporte:
- un support (1) repliable, équipé d'un système de réglage mâle (3) et femelle (4) pour assurer la mise en volume conique du support (1),
- une pluralité de lamelles (11) agencées à la partie supérieure du support (1) en position d'utilisation, et autorisant une ouverture variable s'adaptant au format du bouquet,
- un lien (9) enroulé autour des lamelles (11) pour constituer une première fixation du dispositif permettant une présentation individuelle et verticale des fleurs,
- une feuille (8) étanche placée sous le fond du support (1), et relevée le long de la paroi latérale du support (1),
- et une deuxième fixation formée par un ruban (21) mis en place au-dessus du lien (9), pour maintenir la feuille (8) contre les lamelles (11) entourant les tiges des fleurs, l'ensemble étant agencé pour permettre l'introduction d'eau par un orifice situé au voisinage des lamelles (11) à la partie supérieure du support (1).

2. Dispositif pour la présentation de bouquets selon la revendication 1, **caractérisé en ce que** le support (1) est constitué par une feuille enroulée selon un cône ou un cylindre, posé sur l'autre feuille (8) par sa base constituant un fond ouvert.

3. Dispositif pour la présentation de bouquets selon la revendication 2, **caractérisé en ce que** le support (1) est doté d'orifices (6) pour le passage du lien (9) permettant de solidariser le cône aux tiges des fleurs.

4. Dispositif pour la présentation de bouquets selon la revendication 2, **caractérisé en ce que** le support (1) comporte des moyens de collage (7) destinés à maintenir la deuxième feuille (8) en place avant l'enroulement du ruban (21) de la deuxième fixation.

5. Dispositif pour la présentation de bouquets selon la revendication 2, **caractérisé en ce que** le support (1) est pourvu de languettes (12) découpées se trouvant sous les lamelles (11), de manière à autoriser un positionnement stable de fleurs à grandes tiges.

6. Dispositif pour la présentation de bouquets selon la revendication 2, **caractérisé en ce qu'**une première pièce additionnelle ronde (14) ou carrée (15) peut être adaptée à la partie supérieure du support (1), après pliage des lamelles (11) vers l'extérieur, de manière à transformer le dispositif en coupe jetable.

7. Dispositif pour la présentation de bouquets selon la revendication 1, **caractérisé en ce que** la base du support (1) possède une forme quelconque, notamment carrée, triangulaire, rectangulaire.

8. Dispositif pour la présentation de bouquets selon la revendication 2, **caractérisé en ce qu'**une deuxième pièce additionnelle de forme ronde peut être adaptée au support (1) au niveau du fond.

9. Dispositif pour la présentation de bouquets selon la revendication 1, **caractérisé en ce que** la rigidité de la feuille du support (1) est renforcée par des nervures, ladite feuille pouvant être réalisée par découpage, thermoformage, ou par moulage à injection.

10. Dispositif pour la présentation de bouquets selon la revendication 1, **caractérisé en ce que** le support (1) est réalisé au moyen d'une feuille translucide et résistante à l'eau.

## Patentansprüche

1. Vorrichtung zur Präsentation individueller Blumensträuße, **dadurch gekennzeichnet, dass** sie umfasst:
- einen umknickbaren Träger (1), der mit einem Regulierungssystem zum Einstecken (3) und zur Aufnahme (4) zur Kegelbildung des Trägers (1) versehen ist,
- mehrere Lamellen (11), die in Benutzungsposition im oberen Bereich des Trägers (1) angeordnet sind und das Entstehen einer variablen Öffnung ermöglichen, die an die Größe des Straußes angepasst wird,
- eine Verbindungsvorrichtung (9), die um die Lamellen (1) gewickelt ist, um eine erste Befestigung der Vorrichtung zu bilden, die eine individuelle und vertikale Präsentation der Blumen ermöglicht,
- eine dichte Folie (8), die unter dem Boden des Trägers (1) vorgesehen und entlang der Seitenwand des Trägers (1) hochgebogen wird,
- und eine zweite Befestigung, die aus einem Band (21) besteht, das über der Verbindungsvorrichtung (9) vorgesehen wird, um die Folie (8) gegen die weichen Lamellen (11) gedrückt zu halten, welche die Blumenstiele umgeben, wobei die Einheit so vorgesehen ist, dass sie die Zuführung von Wasser durch eine nahe den Lamellen (11) im oberen Bereich des Trägers (1) gelegene Öffnung erlaubt.

2. Vorrichtung zur Präsentation von Blumensträußen nach Anspruch 1, **dadurch gekennzeichnet, dass** der Träger (1) aus einer Folie besteht, die wie ein Kegel zusammengerollt ist und mit ihrem unteren Bereich, der einen offenen Boden bildet, über die andere Folie (8) gelegt wird.

3. Vorrichtung zur Präsentation von Blumensträußen nach Anspruch 2, **dadurch gekennzeichnet, dass** der Träger (1) mit Öffnungen (6) zum Durchführen der Verbindungsvorrichtung (9) versehen ist, wodurch eine feste Verbindung des Kegels mit den Blumenstielen ermöglicht wird.

4. Vorrichtung zur Präsentation von Blumensträußen nach Anspruch 2, **dadurch gekennzeichnet, dass** der Träger (1) Klebevorrichtungen (7) umfasst, die dazu bestimmt sind, die zweite Folie (8) vor dem Umwickeln des Bands (21) der zweiten Befestigung am Platz zu halten.

5. Vorrichtung zur Präsentation von Blumensträußen nach Anspruch 2, **dadurch gekennzeichnet, dass** der Träger (1) mit ausgestanzten Zungen (12) versehen ist, die sich unter den Lamellen (11) befinden, sodass eine stabile Positionierung langstieliger Blumen ermöglicht wird.

6. Vorrichtung zur Präsentation von Blumensträußen nach Anspruch 2, **dadurch gekennzeichnet, dass** nach dem Knicken der Lamellen (11) nach außen ein erstes zusätzliches rundes (14) oder viereckiges (15) Teil an den oberen Bereich des Trägers (1) angepasst werden kann, um die Vorrichtung zu einer wegwerfbaren Schale zu machen.

7. Vorrichtung zur Präsentation von Blumensträußen nach Anspruch 1, **dadurch gekennzeichnet, dass** der untere Teil des Trägers (1) eine beliebige Form hat, insbesondere eine viereckige, dreieckige, rechteckige.

8. Vorrichtung zur Präsentation von Blumensträußen nach Anspruch 2, **dadurch gekennzeichnet, dass** ein zweites zusätzliches Teil mit einer runden Form an den Träger (1) im Bereich des Bodens angepasst werden kann.

9. Vorrichtung zur Präsentation von Blumensträußen nach Anspruch 1, **dadurch gekennzeichnet, dass** die Starrheit der Folie des Trägers (1) durch Rippen verstärkt wird, welche Folie durch Ausschneiden, Thermoformung oder Spritzgießen hergestellt werden kann.

10. Vorrichtung zur Präsentation von Blumensträußen nach Anspruch 1, **dadurch gekennzeichnet, dass** der Träger (1) aus einer lichtdurchlässigen und wasserfesten Folie hergestellt wird.

## Claims

1. A device for presentation of individual bouquets of flowers, comprising:
- a foldable support (1) equipped with an adjustment system with male (3) and female (4) parts to transform the support (1) into a conical volume,
- a plurality of tongues (11) arranged at the top part of the support (1) in the utilization position, and enabling a variable opening to suit the format of the bouquet,
- a tie (9) tied around the tongues (11) to form a first fixing of the device enabling an individual and vertical presentation of the flowers,
- a water-tight sheet (8) placed under the base of the support (1) and folded up along the side wall of the support (1),
- and a second fixing formed by a ribbon (21) placed above the tie (9) to hold the sheet (8) against the tongues (11) surrounding the stalks of the flowers, the assembly being arranged to allow water to be poured in via an opening situated near to the tongues (11) at the top part of the support (1).

2. The bouquet presentation device according to claim 1, **characterized in that** the support (1) is formed by a sheet folded into a cone placed on the other sheet (8) by its base forming an open base.

3. The bouquet presentation device according to claim 2, **characterized in that** the support (1) is provided with openings (6) for passage of the tie (9) enabling the cone to be secured to the stalks of the flowers.

4. The bouquet presentation device according to claim 2, **characterized in that** the support (1) comprises means of adhesion (7) designed to keep the second sheet (8) in place before the ribbon (21) of the second fixing is wound on.

5. The bouquet presentation device according to claim 2, **characterized in that** the support (1) is provided with cut-out tabs (12) located under the tongues (11) so as to enable flowers with long stalks to be positioned in stable manner.

6. The bouquet presentation device according to claim 2, **characterized in that** a first additional round (14) or square (15) part can be fitted to the upper part of the support (1) after the tongues (11) have been folded outwards, so as to transform the device into a disposable flower-bowl.

7. The bouquet presentation device according to claim 1, **characterized in that** the base of the support (1) is of any shape, notably square, triangular, or rectangular.

8. The bouquet presentation device according to claim 2, **characterized in that** a second additional round-shaped part can be fitted to the support (1) at the level of the base.

9. The bouquet presentation device according to claim 1, **characterized in that** the rigidity of the sheet of the support (1) is strengthened by ribs, said sheet being able to be achieved by cutting, thermoforming, or by injection moulding.

10. The bouquet presentation device according to claim 1, **characterized in that** the support (1) is achieved by means of a translucent, water-resistant sheet.
